# EUROPEAN PATENT APPLICATION

(11) **EP 1 111 893 A2**
(43) Date of publication of application: **27.06.2001**
(21) Application number: 00311511.0
(22) Date of filing: 20.12.2000
(51) Int. Cl.: H04M 7/00

(54) **Private reuse of the public switched telephone network dial plan**

(30) Priority: 20.12.1999 US 466648
(71) Applicant: NORTEL NETWORKS CORPORATION, Montreal, Quebec H2Y 3Y4 (CA)
(72) Inventor: Cashin, Peter M., Carp, Ontario K0A 1L0 (CA)
(74) Representative: Mackenzie, Andrew Bryan

(57) **Abstract**

A method of connecting a calling party connect to the PSTN to a called party connected to an IP network. When a calling party wishes to initiate a voice over IP call to a called party, the calling party need only connect to the IP network through an IP gateway and dial the PSTN telephone number of the called party to complete an IP connection to the called party. An IP gateway or other database is used to perform the necessary translations of addressing and routing information between the PSTN and the IP network for the call to reach its intended destination. In accordance with one aspect of the present invention, the same PSTN directory number assigned to a party for PSTN calls is also used as a designator for that party's IP address. As such, the PSTN dial plan is reused in association with calls placed over an IP network to that party.

## Description

### FIELD OF THE INVENTION

The present invention relates generally to telecommunications networks, and more particularly to a method for reusing the Public Switched Telephone Network (PSTN) dial plan in association with an Internet Protocol (IP) network.

### BACKGROUND OF THE INVENTION

Though originally designed for the transmission of data, Internet Protocol (IP) networks are increasingly being used as an alternative voice communication tool. In recent years there have been many advancements and developments in the area of IP telephony, which refers to communication services e.g. voice, facsimile, and/or voice-messaging applications that are transported via an Internet Protocol network, rather than the Public Switched Telephone Network (PSTN). Telephone subscribers are drawn to IP telephony as an alternative to traditional forms of communications, especially for long-distance telephone calls, because it can offer cost savings relative to the PSTN. With the use of IP telephony, subscribers can bypass long-distance carriers and their per-minute usage rates and run their voice traffic over an IP network, such as the Internet, for a flat monthly Internet access fee.

With the introduction of Session Internet Protocol (SIP), the appeal of IP telephony has increased further. Previous Internet protocols provided communication by transmitting packets of information which did not facilitate telephony. SIP establishes sessions of prolonged communication ideal for telephony.

Presently, a PSTN caller cannot place a voice call over an IF network to an IP terminal by simply dialing a called PSTN directory number. This is because the PSTN is not set up to map a PSTN directory number to an IP address, which is necessary for PSTN-IP network interaction.

In today's IP networks, an IP gateway provides the necessary connectivity between the PSTN and an IP network. Typically, a call from a PSTN caller to a IP called party over an IP network would involve the following steps: (i) the initiation of a PSTN call which is routed over the PSTN to an IP gateway; (ii) an IP call from the IP gateway to the called party using the called party's IF address. The function of the IP gateway is to perform the necessary translations of addressing and routing information between the PSTN and the IP network for the call to reach its intended destination.

The necessity of performing some form of translation in an IP Gateway has been recognized. See, for example Jonathan Rosenberg and Henning Schulzrinne, "Internet Telephony Gateway Location" Bell Laboratories, Columbia University, 1998. However, to date, no means has been suggested for translating PSTN directory numbers to IP addresses that allow for the reuse of the PSTN dial plan.

### SUMMARY OF THE INVENTION

PSTN users are familiar with the use of PSTN directory numbers to establish a connection between two telephones on the PSTN. The present invention utilizes this user familiarity for ease of use in association with calls over an IP network. In accordance with one aspect of the present invention, the same PSTN directory number assigned to a party for PSTN calls is also used as a designator for that party's IP address. As such, the PSTN dial plan is reused in association with calls placed over an IP network to that party. When a calling party wishes to initiate a voice over IP call to a called party whose PSTN telephone number has been so designated, the calling party need only connect to the IP network through an IF gateway and dial the PSTN telephone number of the called party to complete an IP connection to the called party. An IP gateway or other database is used to perform the necessary translations of addressing and routing information between the PSTN and the IP network for the call to reach its intended destination.

The steps of a typical implementation of the present invention include: (i) a calling party initiating a call to a called party through an IF gateway; (ii) the calling party inputting a pre-determined designator such as the PSTN directory number of the called party; (iii) the IP gateway resolving the pre-determined designator to an IP address corresponding to the called party; and (iv) the IP gateway using the IF address to complete the call to the called party across the IP network.

In accordance with another aspect of the present invention, a private Centrex dial plan directory number can also be used as the designator. Any other name or number personally selected by the called party can also be used as the designator for use in association with the present invention.

There is also provided a computer program product having a medium with a computer program embodied thereon, the computer program comprising computer program code for: (i) storing in a table at least one PSTN directory number and a corresponding Internet Protocol Universal Reference Identifier for a subscriber, and (ii) means for querying said table in response to receipt on the PSTN of an input specific to said subscriber by a calling party.

Advantageously, subscribers of the service embodied by the present invention will value the ability to select their own IP names and numbers rather than have them allocated to them by an ISP.

A second advantage is that where the PSTN directory number of the called party is selected as the designator of the called party, the calling party need only remember the PSTN directory number of the called party to connect to the called party over an IP network.

### BRIEF DESCRIPTION OF THE DRAWINGS

Preferred embodiments of the invention will now be described with reference to the attached drawings in which:
Figure 1 is a block diagram of a network used to establish a connection between a calling party and a called party in accordance with a first embodiment of the present invention;
Figure 2 is a flow diagram of the steps taken to establish a connection between a calling party and a called party in accordance with the present invention;
Figure 3 is a block diagram of a network used to establish a connection between a calling party and a called party in accordance with a second embodiment of the present invention; and
Figure 4 shows one example of a medium on which a computer program which implements the present invention may be stored.

### DETAILED DESCRIPTION OF THE PREFERRED EMBODIMENT

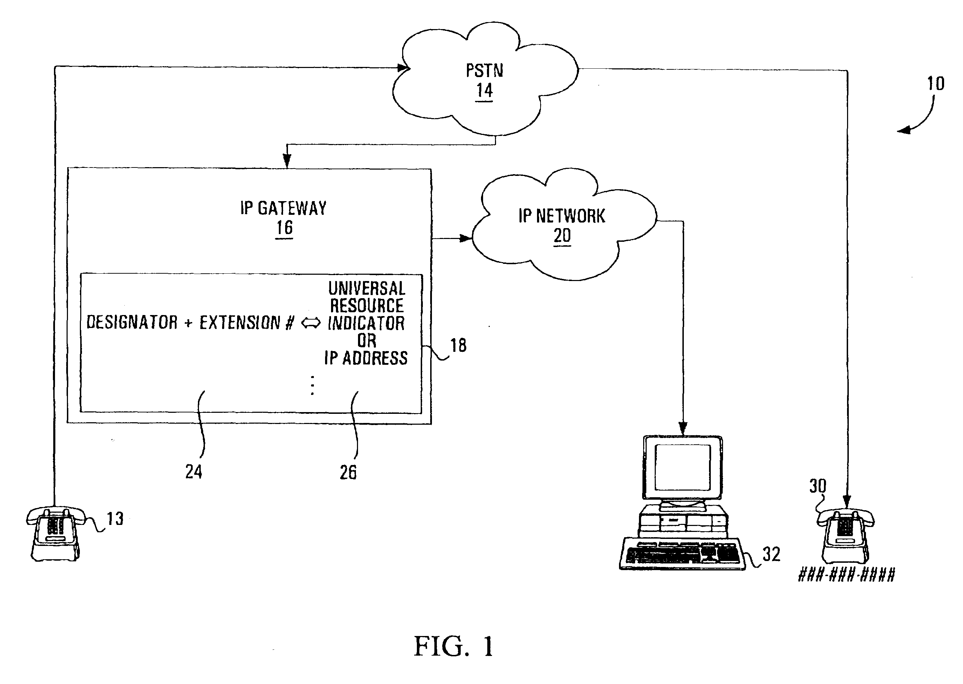

Figure 1 is a block diagram of a network used to establish a connection between a calling party and a called party in accordance with the present invention. Throughout the remainder of this description, the term "subscribing party" is used to designate a party who subscribes to the service of the present invention. The ISP can be any local or global operator or private enterprise offering access to an IP network. In the present description, an ISP is not simply an Internet Service access provider, but any network operator that provides IP network services.

In a network 10 illustrated in Figure 1, a calling party has its PSTN customer premises equipment 13 connected to PSTN 14. A subscribing party has its PSTN customer premises equipment 30 connected to the PSTN 14. As well, the subscribing party has its IP customer premises equipment 32 connected to an IP network 20. IP network 20 is any packet switched network using TCP/IP protocol, including the Internet. IP customer premises equipment 32 is assigned an IP address by IP network 20.

In accordance with the present invention, the subscribing party registers (or is assigned) a designator 24, typically stored within IP gateway 16. Designator 24 can be any number, alphanumeric, or symbolic designation which the subscribing party selects. Usually, a subscribing party will register designator 24 with its Internet Service Provider (ISP), which will be responsible for having the designator stored within IP gateway 16.

By this invention, designator 24 may be a reuse of a PSTN Directory Number (DN) within the context of a private network operator or Internet Service Provider's (ISP's) IP network. This reuse is expected to be co-ordinated and synchronized within the PSTN DN assignment for the convenience of the private network subscribers who will normally be the same subscribers using the corresponding PSTN DN's. The IP network is free to manage the DN within a private network dial plan management and administration. There is thus no requirement for the private network operator to obtain PSTN number allocation of local number portability. The original PSTN DN is not affected by the private IP network reuse of the same DN as the designator for (directly or indirectly) an IP address. Translation of the DN within the IP network may employ any general translation process, and is expected to often use an IP URI (Universal Reference Identifier) which will in turn be translated into an IP address via normal IP network translations.

A reused PSTN DN may be used in practise as an IP network replacement for the original PSTN DN, but it can also be used together with simultaneous continued normal usage of the original PSTN DN. The IP network operator may also provide a service to enable the terminating IP address to be a gateway back into the PSTN that allows the caller to reach the original PSTN DN via the IP network (as a PSTN bypass application).

Designator 24 will comprise the means whereby calling parties can reach a subscribing party over IP network 20 without knowledge of the subscribing party's IP address.

IP gateway 16 is a personal computer or mini computer that manages the operation IP calls between PSTN 14 and IP network 20. The IP gateway 16 is connected to both the PSTN 14 and the IP network 20. The function of the gateway 16 is to provide connection from the PSTN 14 to the IF network 20 and vice versa. Exemplary products that may be used to implement IP gateway 16 include IBM RS/6000, SUN MICROSYSTEMS SPARC Station, and HEWLETT PACKARD HP 9000. IP gateway 16 possesses the processing power and storage capacity necessary to administer, control, process and manage all calls between PSTN 14 and IP network 20. This includes database table 18 used to store designator 24 and its associated universal resource indicator (URI) or IP address 26. Of course, database table 18 can store multiple designators associated with multiple IP addresses. Though not shown, database table 18 may be stored at a remote location to IP gateway 16. As such, the term "gateway" should be interpreted broadly as "logical gateway" since the translation tables described herein may use one or more IP server that are not physically associated with IP gateway 16.

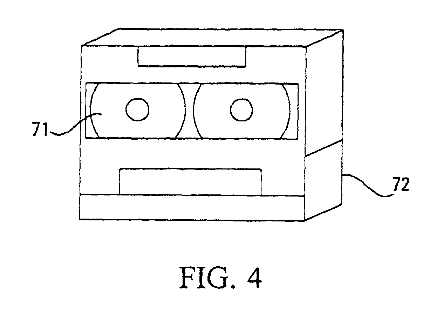

Although the terminology "gateway" is used throughout this description, it will be understood that any equipment, which provides the IP gateway functionality described herein, may be employed. IP gateway 16 has associated with it a computer software program to perform resolutions which translates designators into IP addresses. Further detail concerning the computer software code used to perform the resolution scheme that forms part of the present invention will be described in connection with Figure 4.

To complete an IP call with a subscribing party, the calling party first utilises its PSTN customer premises equipment 13 to initiate a PSTN call over the PSTN 14 to the IP gateway 16. The calling party's PSTN customer premises equipment 13 is preferably a telephone and the connection is initiated by the calling party going off hook then dialling a toll free telephone number, a carrier code, or a local phone number of IP gateway 16.

Once PSTN customer premises equipment 13 has connected to IP gateway 16, the calling party then dials on PSTN customer premises equipment 13 the designator 24 associated with the subscribing party. IP gateway 16 accesses a computer software program which performs a resolution between designator 24 and URI or IP address 26 stored within database table 18. If the URI is stored, then any one of a number of well-known translations can be performed to determine the IF address of subscribing party's IP customer premises equipment 32. IP gateway 16 then utilizes the IP address 26 to complete the connection between the calling party's PSTN customer premises equipment 13 and the subscribing party's IP customer premises equipment 32 over IP network 20.

IP gateway 16 can use any resolution scheme chosen by the subscribers of the service of the present invention. In the preferred embodiment, subscribing parties will re-use the directory number assigned to their PSTN customer premises equipment as designators. Where a subscribing party has chosen its designator 24 to be identical to its PSTN directory number, the calling party does not need to learn a new number for dialing the subscribing party over an IP network. The calling party need only know the PSTN directory number of the called party to connect to the called party over an IP network.

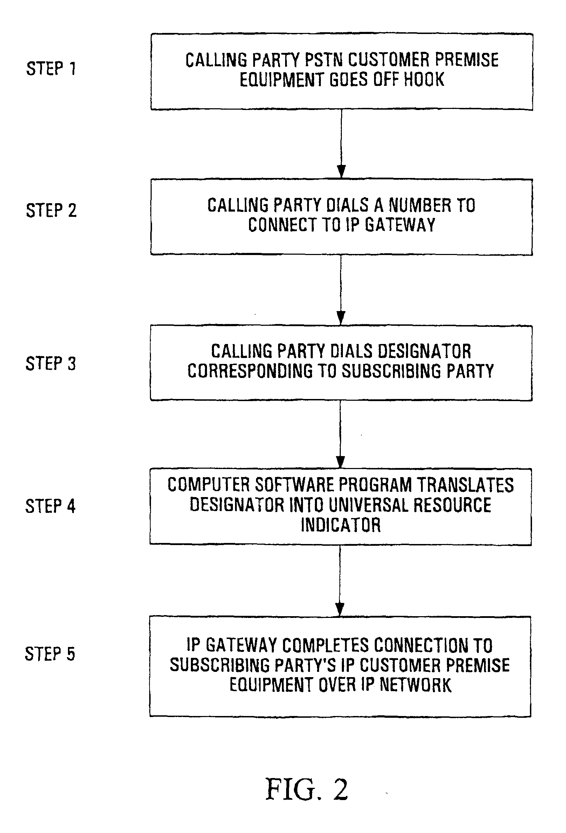

Figure 2 provides a flow diagram of the steps taken to establish a connection between a calling party and a subscribing party in accordance with the present invention. At step 1, the calling party's PSTN customer premises equipment goes off hook. At step 2, the calling party dials a number to connect to the subscribing party's IP gateway. At step 3, the calling party dials the designator corresponding to the subscribing party. At step 4, computer software program code translates the inputted designator into the IP address of the subscribing party. At step 5, the IP gateway uses the IP address to complete a connection to the subscribing party's IP customer premises equipment over an IP network.

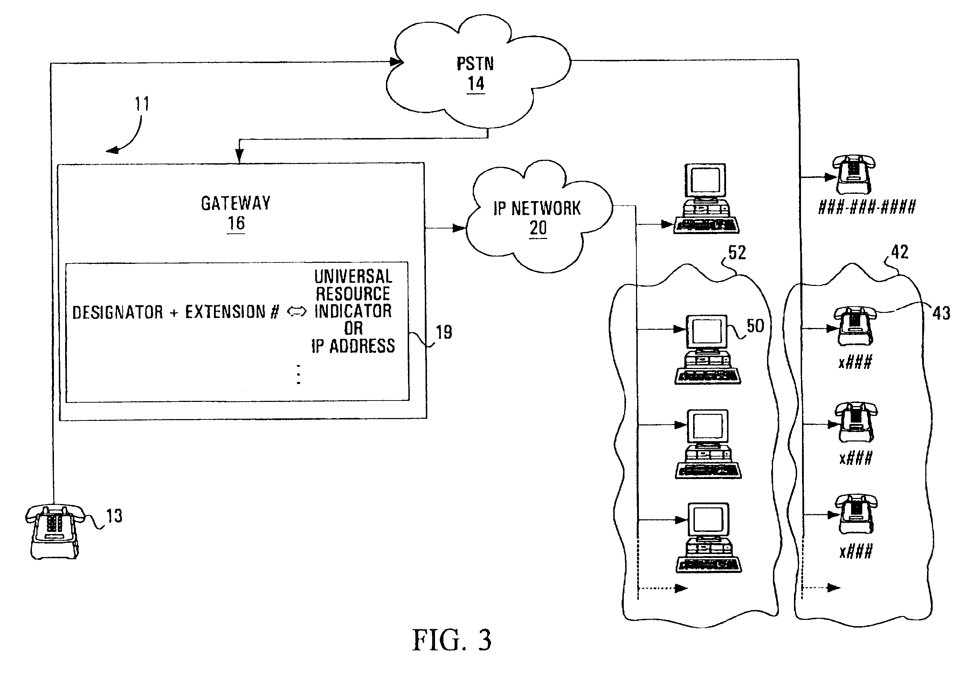

Figure 3 is a block diagram of a second embodiment of a network used to establish a connection between a calling party and a subscribing party in accordance with the present invention. In this second embodiment, a private business group 42, 52 has its PSTN customer premises equipment 43 connected to the PSTN 14 and its IP customer premises equipment 50 connected to an IP network 20. The private business group 42, 52 illustrated in Figure 3 would all subscribe to the Centrex service. Centrex is a service offered by telephone companies that adds to a normal telephone line a package of features normally sought by business customers. For example, Centrex enables customers within a business group to telephone each other by dialling extension numbers (telephone numbers made up of two, three or four digits), instead of the full seven or ten digit PSTN telephone number.

Therefore, PSTN customer premise equipment 43 within business group 42 has associated with it the same PSTN directory number as the other PSTN customer premise equipment within the business group, but a different extension number.

In Figure 3, a calling party has its PSTN customer premises equipment 13 connected to PSTN 14. As in Figure 1, IP gateway 16 is connected to both the PSTN 14 and the IP network 20. The function of the gateway 16 is to provide connection from the PSTN 14 to the IP network 20 and vice versa. IF gateway 16 has associated with it a computer software program (not shown) that performs the resolutions that form part of the present invention. Database table 19 is shown in Figure 1 to reside within gateway 16 but it will be understood that it may be stored in equipment (not shown) remote from gateway 16 as long as such equipment is accessible to IP gateway 16. Database table 19 has stored within it a resolution scheme which translates designators into IP addresses.

The difference between database table 18 in Figure 1 and database table 19 of Figure 3 is that database table 19 is designed for use with business groups such as business groups 42 and 52. Where a subscriber is a member of such a business group, database table 19 allows a second designator to be input to resolve to a particular member of a business group. Typically, database table 19 would store the PSTN number business group 42 and an extension number, which together would be associated with a particular IP address of a business group member.

For example, a caller using PSTN customer premises equipment 13 trying to call a business group member using IP customer premises equipment 50 would input the PSTN number of business group 42 and the particular extension number of PSTN customer premises equipment 43 to IP gateway 16. IP gateway 16 would then search database table 19 and resolve the inputted data with the IP address for IP customer premises equipment 50. IP gateway 16 then utilises the resolved IP address to complete the connection between the calling party's PSTN customer premises equipment 13 and the business group member's IF customer premises equipment 50 over IP network 20.

In network 10 illustrated in Figure 1 and network 11 illustrated in Figure 3, the calling party is utilising PSTN customer premises equipment and the subscribing party is utilising IF customer premises equipment. However, the calling party may utilise any calling device including a PSTN telephone, an IP telephone, an IF terminal or a cellular telephone. Similarly, a subscribing party may have a plurality of different IP and/or PSTN devices. Along with performing the resolutions of the present invention, computer software code within IP gateway 16 may also provide a routing scheme which determines whether a connection between the calling party and the subscribing party is made over the PSTN 14, the IP Network 20 or another connection means.

There are a number of methods of maintaining the integrity of the assignment of designators to subscribing parties. One method is for the subscribing party's ISP to allocate designators on a first-come-first-served basis. However, if a later subscribing party applies to be assigned a designator which is identical to the designator of an earlier subscribing party, the ISP could retain the right to reassign the designator to the later subscribing party if the later subscribing party has a PSTN directory number which is identical to the designator.

Alternatively, verification of the assignment of a designator to a subscribing party is done by an ISP placing an automated telephone call to a PSTN directory number, if one exists, which is identical the designator selected by a subscribing party. A request for permission is made for the use of the designator by the ISP on behalf of the subscribing party. If no objection is made to the allocation of the designator to the subscribing party, then the designator is allocated to the subscribing party. If permission is refused, the subscribing party must select a new designator.

Other verification and audit methods may also be used to insure the integrity of the computer software program. For example, an ISP may allocate the designator to the subscribing party if the calling line identification of subscribing party is identical to the designator requested by subscribing party.

The present invention is typically implemented using a computer program product that forms part of an IP gateway. Appropriate computer program code in combination with such network elements implements the elements of the present invention. This computer program code is often stored on a storage medium, such as a diskette, hard disk, CD-ROM, or tape. The medium can also be a memory storage device or collection of memory storage devices such as read-only memory (ROM) or random access memory (RAM). Figure 5 illustrates one example of a storage medium. Figure 4 shows a tape cartridge of the type where magnetic medium 71 is enclosed in a protective cassette 72. Magnetic field changes over the surface of the magnetic media 71 are used to encode the computer program code.

The above description of a preferred embodiment should not be interpreted in any limiting manner since variations and refinements can be made without departing from the spirit of the invention. The scope of the invention is defined by the appended claims and their equivalents.

## Claims

1. A method of connecting a calling party connected to the PSTN to a called party connected to an IP network comprising the steps of:
i. the calling party initiating a call over the PSTN to a called party through an IP gateway connected between the PSTN and the IP network;
ii. the calling party inputting a pre-determined designator specific to the called party;
iii. the IP gateway resolving the pre-determined designator to an IP address corresponding to the called party; and
iv. the IP gateway using the IP address to complete the call to the called party across the IP network.

2. The method of claim 1 further including the step of the called party forwarding the designator to the IF gateway.

3. The method of any preceding claim wherein the pre-determined designator corresponds to the PSTN telephone number of the called party.

4. The method of any preceding claim wherein the pre-determined designator corresponds to the Centrex telephone number and extension number of the called party.

5. The method of any preceding claim wherein the pre-determined designator is any alphanumeric or symbolic character chosen by the called party.

6. The method of any preceding claim wherein the IP gateway resolves the pre-determined designator to an IP address corresponding to the called party by utilising a computer program stored within the gateway.

7. The method of any preceding claim wherein the IP gateway resolves the pre-determined designator to an IP address corresponding to the called party by searching a database table stored at a location remote from the gateway.

8. The method of any preceding claim further including the step of the IP gateway storing multiple designators corresponding to the private dial plan of a Centrex business group.

9. A gateway for connection between a PSTN and an IP network, the gateway comprising means responsive to receipt on the PSTN of a pre-determined designator input by a calling party and specific to a desired called party connected to the IF network, means for querying a table of designators mapping to IP addresses and means for completing a call from the calling party to the called party using an IP address obtained from the table.

10. The gateway of claim 9 wherein the pre-determined designator corresponds to the PSTN telephone number of the called party.

11. The gateway of any of claims 9-10 further including means responsive to receipt of a designator chosen by the called party.

12. The gateway of any of claims 9-11 wherein the pre-determined designator corresponds to the PSTN telephone number and extension number of the called party.

13. The gateway of any of claims 9-12 wherein the pre-determined designator is an alphanumeric or symbolic character chosen by the called party.

14. The gateway of any of claims 9-13 wherein the IP gateway resolves the pre-determined designator to an IP address corresponding to the called party by searching a database table stored at a location remote from the gateway.

15. The gateway of any of claims 9-14 further including means for storing multiple designators corresponding to the private dial plan of a Centrex business group.

16. A computer program product having a medium with a computer program embodied thereon, the computer program comprising computer program code for: (i) storing in a table at least one PSTN directory number and a corresponding Internet Protocol Universal Reference Identifier for a subscriber, and (ii) means for querying said table in response to receipt on the PSTN of an input specific to said subscriber by a calling party.

17. The computer program product of claim 16 wherein said computer program is stored within an IP gateway in an IP network.

18. The computer program product of any of claims 16-17 wherein said table further includes an extension number for the subscriber.
